# EUROPEAN PATENT SPECIFICATION

(11) **EP 0 712 748 B1**
(45) Date of publication and mention of the grant of the patent: **07.01.1999**
(21) Application number: 95307356.6
(22) Date of filing: 17.10.1995
(51) Int. Cl.: B60J 10/04, B60J 10/00

(54) **Stabilizing sealing member and its method of production**
Stabilisierungsvorrichtung und Verfahren zu dessen Herstellung
Dispositif de stabilisation et méthode pour sa production

(30) Priority: 17.11.1994 GB 9423215
(43) Date of publication of application: 22.05.1996
(73) Proprietor: Standard Products Limited, Huntingdon Cambridgeshire PE18 6NU (GB)
(72) Inventor: Griffin, Nigel, Eggbuckland, Plymouth PL6 5XH (GB); Bromhead, Paul Terence, Whitleigh, Plymouth PL5 4ES (GB); Nelson, Andrew Charles, Tavistock, Devon PL19 8DQ (GB); Stephenson, Dennis Arthur, Callington, Cornwall PL17 8PG (GB)
(74) Representative: Jones, Michael Raymond

(56) References cited:
- EP-A- 0 384 776
- FR-A- 2 361 523
- GB-A- 995 239
- GB-A- 1 542 036
- US-A- 5 265 377
- PATENT ABSTRACTS OF JAPAN vol. 7 no. 98 (M-210) [1243] ,26 April 1983 & JP-A-58 020517 (NISSAN JIDOSHA) 7 February 1983,
- PATENT ABSTRACTS OF JAPAN vol. 7 no. 169 (M-231) [1314] ,26 July 1983 & JP-A-58 073423 (NISSAN JIDOSHA) 2 May 1983,

## Description

This invention relates to a sealing member capable of stabilizing a movable element particularly, although not exclusively, a movable window pane of a motor vehicle, and its method of production.

Waistseal sealing members are known which comprise a resiliently flexible lip extending from a relatively rigid body which is attachable to a window surround of a motor vehicle door. The lip is adapted to be in contact with a movable window pane when the window pane is partly or fully raised. When the window pane is fully lowered, it can pass below the lip of the seal for part or all of the width of the glass and the lip flexes over the upper edge of the window pane. However, it has been found that when the window pane is fully or partially lowered it may vibrate or rattle due to lateral movement initiated by vibration within the vehicle body or from external sources such as wind pressure vibrations. This lateral movement is annoying to the occupants of the vehicle and may result in damage to the window pane.

In order to overcome this problem, metal, plastic, or rubber stabilizing elements have been attached by means of rivets, adhesive, tape or clips to the body of the seal in order that the stabilizing element is in contact with the window pane in all positions of its longitudinal (i.e. vertical) movement, thus restricting the lateral movement of the window pane. However, certain disadvantages have been encountered with these known stabilizing elements. In this respect, it has been found to be very costly to incorporate a separate machine or employ a worker to attach the stabilizing elements after the waistseal has been produced. Additionally, the weight of the metal stabilizing elements has been found to be inconveniently large. Further disadvantages occur in the lead time and work in progress. Thus, in attaching a stabilizer the manufacturing lead time (the time from when component manufacture starts to packing) is prolonged, and the work in progress is increased due to the need to stock and handle an additional component.

In GB-A-1542036, there is disclosed a sealing member comprising:
a relatively rigid body member having an upper portion and a lower portion, which body member comprises an elastomeric material surrounding at least a part of a reinforcing member;
a resiliently flexible portion formed of an elastomeric material extending from the body member; and
a stabilizer portion protruding outwardly from the body member on the same side thereof as the resiliently flexible portion;
   wherein the stabilizer portion is integral with and formed from at least part of the body member and is positioned between the upper portion and the lower portion of the body member.

According to a first aspect of the present invention, there is provided a sealing member comprising:
a relatively rigid body member having an upper portion and a lower portion, which body member comprises an elastomeric material surrounding at least a part of a reinforcing member;
a resiliently flexible portion formed of an elastomeric material extending from the body member; and
a stabilizer portion protruding outwardly from the body member on the same side thereof as the resiliently flexible portion;
   wherein the stabilizer portion is integral with and formed from at least part of the body member and is positioned between the upper portion and the lower portion of the body member;
   characterised in that the lower portion of the body member is an enlarged lower portion comprising the elastomeric material and the reinforcing member, and in that the integral stabilizer portion is formed from the elastomeric material and the reinforcing member of part of the enlarged lower portion.

The resiliently flexible portion may be a lip portion or a bulb portion.

A low friction material such as flock is preferably positioned on the enlarged lower portion and may also be positioned on either or both of the stabilizer portion and the resiliently flexible portion.

The sealing member according to an embodiment of the first aspect of the present invention may further include a leg member, wherein the leg member and the body member form a channel capable of receiving a flange member or the like on which the sealing member is to be positioned.

Preferably, the resiliently flexible portion is formed of an elastomeric material and the body portion is conveniently formed of an elastomeric material surrounding at least a part of a reinforcing member. The elastomeric material is preferably EPDM and, in a preferred embodiment, the reinforcing member is formed of steel or aluminium.

According to a second aspect of the present invention, there is provided a method of forming a longitudinally extending stabilizing sealing member according to the first aspect of the invention, the method comprising the steps of:
forming a tongue in the body member, the tongue comprising a part of the elastomeric material and of the reinforcing member of the enlarged lower portion of the body member; and
shaping the tongue to form an outwardly protruding stabilizing portion between the upper portion and enlarged lower portion of the body member.

The flexible portion may be formed as a lip portion or as a bulb portion.

In an embodiment of the second aspect of the invention, the tongue is preferably formed by making at least one cut, preferably two cuts, in the body portion and, in a preferred embodiment, the forming and shaping of the tongue are carried out by single device. The tongue may be shaped by folding the cut portion, preferably twice. Furthermore, the device may further cut the sealing member to the required length.

For a better understanding of the present invention, and to show how the same may be carried into effect, reference will now be made, by way of example, to the accompanying drawings, in which:
Figure 1 shows a cross-section of a sealing member known in the art;
Figure 2 shows a perspective view, partially in cross-section, of a sealing member known in the art;
Figure 3 shows a cross-section of a sealing member of Figure 2 in use;
Figure 4A shows a cross-section view of one embodiment of a sealing member according to the present invention, before formation of the stabilizing portion;
Figure 4B shows a diagrammatic face view of the sealing member shown in Figure 4A, showing two cuts;
Figure 5A shows a cross-section of the same sealing member as in Figure 4A, but after formation of the stabilizing portion; and
Figure 5B shows a diagrammatic face view of the sealing member shown in Figure 5A.

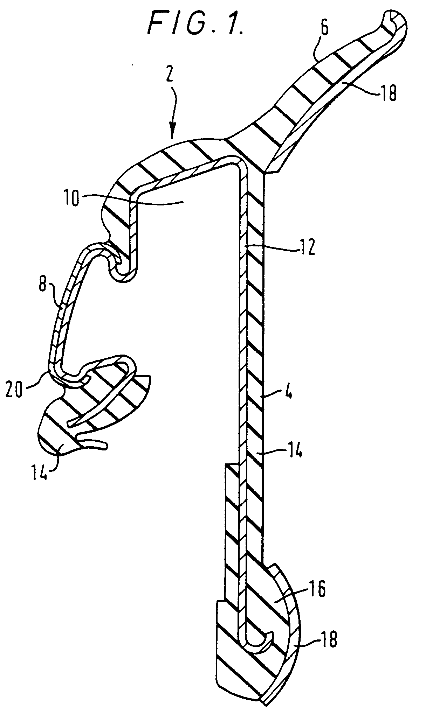

Turning to Figure 1, there is shown a sealing member shown generally at 2 comprising a body portion 4, a lip portion 6, and a leg portion 8. The leg portion 8 and body portion 4 together form a channel 10 which is adapted to receive a flange portion of a vehicle window surround on which the sealing member 2 is to be positioned.

An aluminium reinforcing member 12 constitutes part of the body portion 4 and extends therefrom to form part of the leg portion 8.

EPDM rubber material 14 partially surrounds the reinforcing member 12 on the body portion 4 and leg portion 8. The EPDM rubber material in the lower region of the body portion forms an enlarged portion 16. The EPDM rubber material extends from the junction of the body portion 4 and leg portion 8 to form the lip portion 6 which is resiliently flexible. Flocking material 18 is adhered to the enlarged portion 16 and to the resiliently flexible lip portion 6. Mylar film 20 (which may alternatively be stainless steel) is present over part of the leg portion 8 in a region where it will be visible on the exterior of a vehicle.

The process for producing the known sealing member 2 is as follows.

An aluminium reinforcing member in the form of a flat sheet is rolled into the shape of the reinforcing member 12 with the mylar film 20 (or stainless steel) clinched. The shaped reinforcing member 12 is passed through a rubber extrusion head where the EPDM rubber material 14 is applied. The extrudate is then passed through an oven to vulcanize the EPDM material 14. Subsequently, the extrudate is treated in a chlorine tank in order to raise the surface energy of the EPDM material 14 and to allow good wet-out (intimate contact of adhesive and surface) and adhesion of adhesive.

Adhesive is then applied in the regions where flocking is required, and the flocking material 18 is applied electrostatically. The flock adhesive is then cured in an oven and the product is cooled in a water tank. The strip so produced is then cut to a length slightly larger than that which is to be required. The over length part is then loaded into a transfer press which continuously moves up and down and in doing so gradually moves the part across a transfer press table in a series of defined lateral movements. At each of the defined movements, the part is automatically positioned in a press tool and the vertical movement ensures that a particular press operation is carried out at that point (for example the strip may be cut to length, or pierced, or notched). Thus the transfer press is capable of carrying out several operations without any operator involvement other than the original loading of the part.

In use, the sealing member 2 is positioned on a window surround of a vehicle door such that the channel 10 receives a flange on the vehicle door. The flocking material 18 of the lip portion 6 and enlarged lower portion 16 abut a movable window pane which may be raised or lowered. The structure of the enlarged lower portion 16 is too weak to act as a stabilizer. The flocking material provides a low friction surface for movement against the window pane. When the window pane is fully lowered, the resiliently flexible lip portion 6 flexes over the upper edge of the window pane, but the flocking material 18 of the lower portion 16 remains in contact with the window pane.

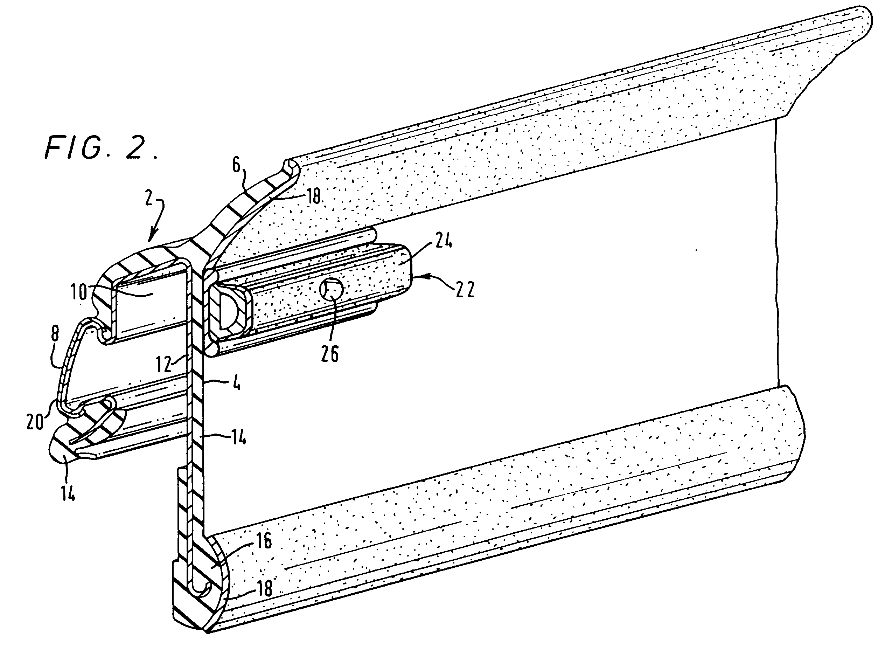

Figure 2 shows the sealing member of Figure 1 on which is attached a stabilizer portion 22. The stabilizer portion 22 is formed of a metal base which carries an arcuate element formed of an elastomeric material on which is attached flocking material 24. Also provided on the stabilizer portion 22 is a hole 26 through which a rivet may be passed in order to attach the stabilizer portion 22 to the body portion 4 of the sealing member 2.

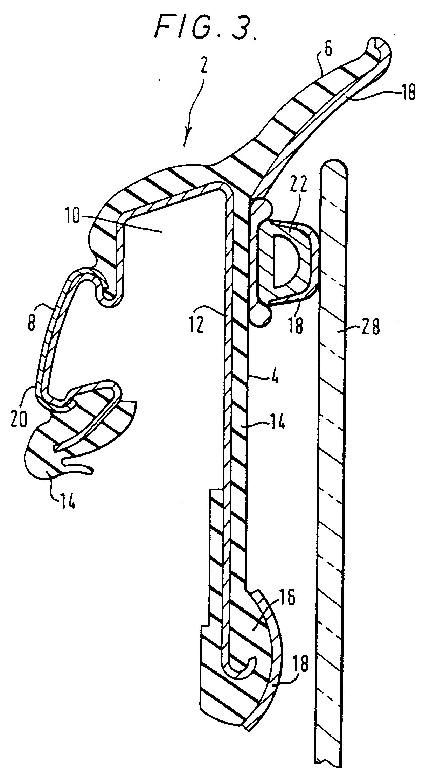

Figure 3 shows the sealing member of Figure 2 in use. A glass window pane 28 is shown in its lowered position. In this lowered position, the stabilizer portion 22 abuts the window portion 28 in order to prevent lateral movement of the window pane 28 and therefore prevents vibration or rattling. Whilst it is not shown in Figure 3, the enlarged lower portion may contact the window pane 28 but does not provide significant stabilization. The stabilizer portion 22 in this respect exerts a small amount of lateral pressure thus holding the window pane 28 in position. In this lowered position, the lip portion 6 flexes over the upper edge of the window pane 28 but, as the window pane 28 is raised, the lip portion 6 flexes back but remains in contact with the glass window pane 28.

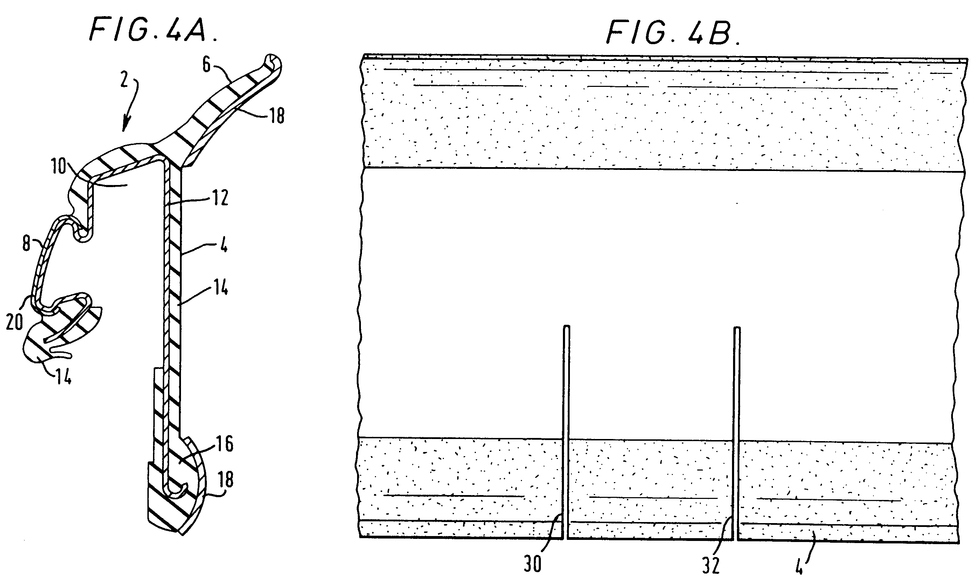

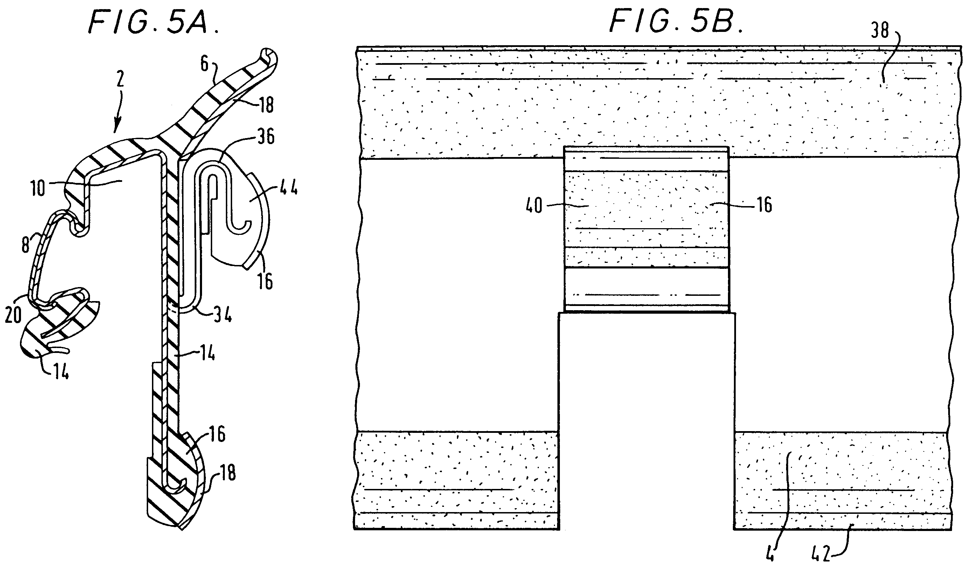

Figure 4A shows the sealing member 2 of Figure 1 which is to be shaped to form the sealing member of the present invention. The sealing member 2 is prepared as described above in relation to Figure 1. Figure 4B shows a diagrammatical face view of Figure 4A in which two cuts 30 and 32 are made in the body portion 4. As shown in Figure 5A, the cut portion is folded at folding points 34 and 36 in order that the enlarged lower portion 16 projects from a face of the body portion 4. Each of the areas 38, 40, and 42 shown in Figure 5B are flocked. In this manner, the folded enlarged portion protruding from a face of the body portion 4 can act as a stabilizing portion 44 to prevent lateral movement of a window pane as described above.

The invention greatly simplifies the manufacturing process since the stabilizing portion 44 is created by punching and forming operations which can be carried out in the transfer press and do not require a separate attachment of the stabilizing portion.

## Claims

1. A sealing member (2) comprising:
a relatively rigid body member (4) having an upper portion and a lower portion (16), which body member comprises an elastomeric material surrounding at least a part of a reinforcing member (12);
a resiliently flexible portion (6) formed of an elastomeric material extending from the body member (4); and
a stabilizer portion (44) protruding outwardly from the body member (4) on the same side thereof as the resiliently flexible portion (6);
wherein the stabilizer portion (44) is integral with and formed from at least part of the body member (4) and is positioned between the upper portion and the lower portion of the body member (4);
characterised in that the lower portion (16) of the body member (4) is an enlarged lower portion (16) comprising the elastomeric material and the reinforcing member (12), and in that the integral stabilizer portion (44) is formed from the elastomeric material and the reinforcing member (12) of part of the enlarged lower portion (16).

2. A sealing member (2) according to claim 1, wherein the resiliently flexible portion (6) is a lip portion.

3. A sealing member (2) according to claim 1, wherein the resiliently flexible portion (6) is a bulb portion.

4. A sealing member (2) according to any preceding claim, wherein a low friction material (18) is positioned on the enlarged lower portion (16).

5. A sealing member (2) according to any preceding claim, wherein a low friction material (18) is positioned on either or both of the stabilizer portion (44) and the resiliently flexible portion (6).

6. A sealing member (2) according to any preceding claim, further including a leg member (8), wherein the leg member (8) and the body member (4) form a channel (10) capable of receiving a flange member on which the sealing member (2) is to be positioned.

7. A sealing member (2) according to any preceding claim, wherein the elastomeric material is EPDM.

8. A sealing member (2) according to any preceding claim, wherein the reinforcing member (12) is formed of steel or aluminium.

9. A method of forming a longitudinally-extending stabilizing sealing member (2) as claimed in claim 1, the method comprising the steps of:
forming a tongue in the body member (4), the tongue comprising a part of the elastomeric material and of the reinforcing member (12) of the enlarged lower portion (16) of the body member (4); and
shaping the tongue to form an outwardly protruding stabilizing portion (44) between the upper portion and enlarged lower portion (16) of the body member (4).

10. A method according to claim 9, wherein the flexible portion (6) is formed as a lip portion.

11. A method according to claim 9, wherein the flexible portion (6) is formed as a bulb portion.

12. A method according to any one of claims 9 to 11, wherein the tongue is formed by making at least one cut in the body member (4) to form a cut portion.

13. A method according to claim 12, wherein the tongue is shaped by folding the cut portion.

14. A method according to claim 13, wherein the cut portion is folded twice.

15. A method according to any one of claims 9 to 14, wherein the forming and shaping of the tongue are carried out by a single device.

16. A method according to claim 15, wherein the device further cuts the sealing member (2) to the required length.

## Patentansprüche

1. Dichtungsglied (2) aufweisend:
ein relativ starres Hauptglied (4) mit einem oberen Bereich und einem unteren Bereich (16), welches Hauptglied ein Elastomermaterial aufweist, welches mindestens einen Teil eines Verstärkungsgliedes (12) umgibt;
einen elastischen flexiblen Bereich (6), welcher aus einem Elastomermaterial gebildet ist, welches sich von dem Hauptglied (4) aus erstreckt; und
einen Stabilisierungsbereich (44), welcher von dem Hauptglied (4) auf der gleichen Seite wie der elastische flexible Bereich (6) nach aussen wegragt;
bei welchem der Stabilisierungsbereich (44) integral mit und aus mindestens einem Teil des Hauptliedes (4) gebildet ist und zwischen dem oberen Bereich und dem unteren Bereich des Hauptgliedes (4) liegt;
**dadurch gekennzeichnet,** dass der untere Bereich (16) des Hauptgliedes (4) ein vergrößerter unterer Bereich (16) ist, welcher das Elastomermaterial und das Verstärkungsglied (12) aufweist, und dass der integrale Stabilisierungsbereich (44) aus dem Elastomermaterial und dem Verstärkungsglied (12) eines Teils des vergrößerten unteren Bereiches (16) gebildet ist.

2. Dichtungsglied (2) nach Anspruch 1, bei welchem der elastische flexible Bereich (6) ein lippenartiger Bereich ist.

3. Dichtungsglied (2) nach Anspruch 1, bei welchem der elastische flexible Bereich (6) ein ballonartiger Bereich ist.

4. Dichtungsglied (2) nach einem vorhergehenden Anspruch, bei welchem ein Material mit niedrigem Reibungskoeffizienten (18) auf dem vergrößerten unteren Bereich (16) angeordnet ist.

5. Dichtungsglied (2) nach einem vorhergehenden Anspruch, bei welchem ein Material mit niedrigem Reibungskoeffizienten (18) auf dem Stabilisierungsbereich (44) und/oder dem elastischen flexiblen Bereich (6) angeordnet ist.

6. Dichtungsglied (2) nach einem vorhergehenden Anspruch, weiterhin enthaltend ein Schenkelglied (8), bei welchem das Schenkelglied (8) und das Hauptglied (4) einen Kanal (10) bilden, welcher ein Flanschglied aufnehmen kann, auf welchem das Dichtungsglied (2) anzuordnen ist.

7. Dichtungsglied (2) nach einem vorhergehenden Anspruch, bei welchem das Elastomerimaterial EPDM ist.

8. Dichtungsglied (2) nach einem vorhergehenden Anspruch, bei welchem das Verstärkungsglied (12) aus Stahl oder Aluminium gebildet ist.

9. Verfahren zum Herstellen eines langgestreckten stabilisierenden Dichtungsgliedes (2) nach Anspruch 1, welches die Schritte enthält:
Bilden einer Zunge in dem Hauptglied (4), welche einen Teil des Elastomermaterials und des Verstärkungsgliedes (12) des vergrößerten unteren Bereiches (16) des Hauptgliedes (4) enthält; und
Formen der Zunge zum Bilden eines nach außen vorstehenden Stabilisierungsbereiches (44) zwischen dem oberen Bereich und dem vergrößerten unteren Bereich (16) des Hauptgliedes (4).

10. Verfahren nach Anspruch 9, bei welchem der flexible Bereich (6) als lippenartiger Bereich gebildet wird.

11. Verfahren nach Anspruch 9, bei welchem der flexible Bereich (6) als ballonartiger Bereich gebildet wird.

12. Verfahren nach einem der Ansprüche 9 bis 11, bei welchem die Zunge durch Ausführen mindestens eines Schnittes in dem Hauptglied (4) gebildet wird, um einen Schnittbereich zu gestalten.

13. Verfahren nach Anspruch 12, bei welchem die Zunge durch Falten des Schnittbereiches gestaltet wird.

14. Verfahren nach Anspruch 13, bei welchem der Schnittbereich zweifach gefaltet wird.

15. Verfahren nach einem der Ansprüche 9 bis 14, bei welchem das Bilden und das Gestalten der Zunge von einer einzigen Vorrichtung ausgeführt werden.

16. Verfahren nach Anspruch 15, bei welchem die Vorrichtung das Dichtungsglied (2) weiterhin auf die benötigte Länge zuschneidet.

## Revendications

1. Elément d'étanchéité (2) comportant :
un élément de corps relativement rigide (4) ayant une partie supérieure et une partie inférieure (16), lequel élément de corps comporte une matière élastomère entourant au moins une partie d'un élément de renfort (12);
une partie flexible élastique (6) formée dans une matière élastomère s'étendant depuis l'élément de corps (4); et
une partie de stabilisateur (44) qui dépasse vers l'extérieur de l'élément de corps (4) du même côté de celui-ci que la partie flexible élastique (6);
la partie de stabilisateur (44) étant d'un seul tenant avec et formée dans au moins une partie de l'élément de corps (4) et étant positionnée entre la partie supérieure et la partie inférieure de l'élément de corps (4);
caractérisé en ce que la partie inférieure (16) de l'élément de corps (4) est une partie inférieure agrandie (16) comportant la matière élastomère et l'élément de renfort (12), et en ce que la partie de stabilisateur d'un seul tenant (44) est formée dans la matière élastomère et l'élément de renfort (12) d'une partie de la partie inférieure agrandie (16).

2. Elément d'étanchéité (2) selon la revendication 1, dans lequel la partie flexible élastique (6) est une partie de lèvre.

3. Elément d'étanchéité (2) selon la revendication 1, dans lequel la partie flexible élastique (6) est une partie renflée.

4. Elément d'étanchéité (2) selon l'une quelconque des revendications précédentes, dans lequel une matière à faible friction (18) est positionnée sur la partie inférieure agrandie (16).

5. Elément d'étanchéité (2) selon l'une quelconque des revendications, dans lequel une matière à faible friction (18) est positionnée sur chacune ou bien à la fois sur la partie de stabilisation (44) et la partie flexible élastique (6).

6. Elément d'étanchéité (2) selon l'une quelconque des revendications précédentes, comprenant en outre un élément de patte (8), l'élément de patte (8) et l'élément de corps (4) formant un canal (10) capable de recevoir un élément de rebord sur lequel doit être positionné l'élément d'étanchéité (2).

7. Elément d'étanchéité (2) selon l'une quelconque des revendications précédentes, dans lequel la matière élastomère est de l'EPDM.

8. Elément d'étanchéité (2) selon l'une quelconque des revendications précédentes, dans lequel l'élément de renfort (12) est formé en acier ou en aluminium.

9. Procédé destiné à former un élément d'étanchéité de stabilisation s'étendant longitudinalement (2) selon la revendication 1, le procédé comportant les étapes consistant à :
former une languette dans l'élément de corps (4), la languette comportant une partie de la matière élastomère et de l'élément de renfort (12) de la partie inférieure agrandie (16) de l'élément de corps (4); et
mettre en forme la languette afin de former une partie de stabilisation dépassant vers l'extérieur (44) entre la partie supérieure et la partie inférieure agrandie (16) de l'élément de corps (4).

10. Procédé selon la revendication 9, dans lequel la partie flexible (6) est sous la forme d'une partie de lèvre.

11. Procédé selon la revendication 9, dans lequel la partie flexible (6) est sous la forme d'une partie renflée.

12. Procédé selon l'une quelconque des revendications 9 à 11, dans lequel la languette est formée en réalisant au moins une découpe dans l'élément de corps (4) afin de former une partie découpée.

13. Procédé selon la revendication 12, dans lequel la languette est mise en forme en pliant la partie découpée.

14. Procédé selon la revendication 13, dans lequel la partie découpée est pliée deux fois.

15. Procédé selon l'une quelconque des revendications 9 à 14, dans lequel le formage et la mise en forme de la languette sont réalisés par un dispositif unique.

16. Procédé selon la revendication 15, dans lequel le dispositif découpe en outre l'élément d'étanchéité (2) à la longueur requise.
